# EUROPÄISCHE PATENTSCHRIFT

(11) **EP 0 694 451 B1**
(45) Veröffentlichungstag und Bekanntmachung des Hinweises auf die Patenterteilung: **28.05.1997**
(21) Anmeldenummer: 95108693.3
(22) Anmeldetag: 07.06.1995
(51) Int. Cl.: B60R 25/10, G01R 31/00

(54) **Fahrzeugsicherungsanordnung**
Vehicle security device
Dispositif de sécurité pour véhicule

(30) Priorität: 30.07.1994 DE 4427084
(43) Veröffentlichungstag der Anmeldung: 31.01.1996
(73) Patentinhaber: ROBERT BOSCH GMBH, 70442 Stuttgart (DE)
(72) Erfinder: Denz, Helmut, Dipl. Ing., D-70176 Stuttgart (DE); Burger,Wilfried, Dr. Dipl. Phys., D-71282 Hemmingen (DE)

(56) Entgegenhaltungen:
- DE-A- 4 414 644
- DE-C- 3 810 806
- FR-A- 2 451 848
- FR-A- 2 680 007
- GB-A- 2 115 162

## Beschreibung

### Stand der Technik

Die Erfindung geht aus von einer Anordnung nach der Gattung des Hauptanspruchs, wie sie in der deutschen Patentanmeldung, 44 14 644 (am 4-5-95 offenbart) oder EP 0 725 743 A (am 14-8-96 offenbart, Art. 54(3)EPÜ) vorgeschlagenen ist. Danach erfolgt eine Fahrzeugfreigabe erst nach vorhergehender Entriegelungskoffmunikation zwischen einem Diebstahlschutzsteuergerät und einem Motorfunktionssteuergerät über ein die beiden Geräte verbindendes Leitungssystem. An das Leitungssystem können noch weitere Funktionssteuergeräte angeschlossen sein. Über eine Schnittstelle ist ferner ein externes Gerät, insbesondere ein Motortester, anschließbar, welches wie das Diebstahlschutzsteuergerät ebenfalls zur Kontrolle des Datenaustausches auf dem Leitungssystem ausgebildet ist. Wird ein externes Gerät dieser Art an das Leitungsnetz angeschlossen, gibt das Diebstahlschutzsteuergerät die Funktion der Kontrolleinheit über den Datenaustausch auf dem Leitungssystem zur Vermeidung eines Kommunikationskonfliktes an das externe Gerät ab. Eine vorteilhafte Lösung zur Realisierung dieser Kontrollfunktionsabgabe besteht darin, in dem Leitungssystem eine Schaltvorrichtung anzuordnen, mittels derer das Leitungssystem in einen ersten, das Diebstahlschutzsteuergerät und eines der Motorfunktionssteuergeräte verbindenden, sowie einen zweiten, die weiteren Funktionssteuergeräte und die Schnittstelle zum Anschluß des externen Gerätes verbindenden Teil trennbar ist. Als für die vorstehend beschriebenen Zwecke geeignetes Leitungssystem bietet sich insbesondere die in vielen Kraftfahrzeugen ohnehin vorhandene K-Testerleitung an.

In komplexen Anordnungen wie der vorbeschriebenen Fahrzeugsicherungsanordnung können aufgrund von Materialfehlern, Verschleiß, fehlerhafter Installation, oder äußerer Einwirkungen Fehler auftreten, welche entweder die Funktion der Anordnung als ganze oder aber zumindest deren Sicherheitswirkung beeinträchtigen.

Aufgrund der Vielzahl miteinander verbundener Elemente besteht eine Schwierigkeit im Falle einer Fehlfunktion darin, diese sicher einem der Elemente zuzuordnen. Stellt beispielsweise ein als externes Gerät angeschlossener Motortester fest, daß eine Kommunikation mit einem bestimmten Motorfunktionssteuergerät nicht mehr möglich ist, kann dies einerseits daran liegen, daß das betreffende Motorfunktionssteuergerät defekt ist, andererseits aber auch daran, daß die in dem Leitungssystem angeordnete Schaltvorrichtung defekt ist. In ähnlicher Weise kann beispielsweise eine fehlerhafte Kommunikation zwischen Diebstahlschutzsteuergerät und Motorfunktionssteuergerät sowohl auf einem Defekt eines der beiden Geräte als auch auf einem Defekt der Schaltvorrichtung beruhen.

Der Erfindung liegt die Aufgabe zugrunde, eine Einrichtung anzugeben, die es gestattet, eine mögliche Fehlfunktion eindeutig einem der beteiligten Elemente zuzuordnen.

Diese Aufgabe wird gelöst durch eine Anordnung mit den Merkmalen des Anspruchs 1. Eine erfindungsgemäß ausgeführte Fahrzeugsicherungsanordnung gestattet es in zuverlässiger Weise, eine Fehlfunktion der Schaltvorrichtung zu diagnostizieren. Sie erlaubt insbesondere festzustellen, ob die Schaltvorrichtung aufgrund eines Defektes dauerhaft geschlossen oder dauerhaft geöffnet ist. Es ist deshalb stets klar entscheidbar, ob ein Kommunikationsfehler zwischen zwei Elementen durch das Leitungssystem mit der Schaltvorrichtung oder durch eines der beteiligten Elemente bedingt ist. Ein unnötiges Austauschen etwa eines Motorfunktionssteuergeräts aufgrund einer falschen Fehlerdiagnose kann dadurch entfallen. Dies reduziert in vorteilhafter Weise den Wartungs- und den damit verbundenen Kostenaufwand. Die erfindungsgemäße Überwachungseinrichtung ist vorteilhaft in eines oder mehrere der über das Leitungssystem verbundenen Steuergeräte integriert und gestattet so jederzeit eine Eigendiagnose.

Indem sie ein fehlerhaftes dauerndes Geschlossensein der Schaltvorrichtung sofort feststellt, gewährleistet die erfindungsgemäße Einrichtung, daß es zu keiner Zeit möglich ist, die Fahrzeugsicherungsanordnung mit Hilfe eines zweiten, an die Schnittstelle für ein externes Gerät angeschlossenen Diebstahlschutzgerätes zu umgehen. Dadurch ergibt sich eine Erhöhung der Funktionssicherheit der Fahrzeugsicherungsanordnung.

Vorteilhaft erfolgt die Überwachung der Schaltvorrichtung, indem das auf dem zweiten Leitungsteil anliegende Signal daraufhin überwacht wird, ob es mit einem vorbestimmten, auf dem ersten Leitungsteil anliegenden Signal übereinstimmt.

Alternativ oder ergänzend kann das auf dem ersten Leitungsteil anliegende Signal erfaßt und daraufhin geprüft werden, ob es mit einem auf dem zweiten Leitungsteil anliegenden Signal übereinstimmt. Das auf dem zweiten Leitungsteil anliegende Signal wird dabei insbesondere durch ein an den zweiten Leitungsteil angeschlossenes externes Gerät erzeugt.

Ein Ausführungsbeispiel der Erfindung wird nachfolgend anhand der Zeichnung näher erläutert.

### Zeichnung

Es zeigen Figur 1 ein Blockschaltbild einer vorgeschlagenen Fahrzeugsicherungsanordnung, Figur 2 mögliche auf den Leitungsteilen anliegende Signale, Figur 3 eine Ausführung eines Diebstahlschutzsteuergeräts.

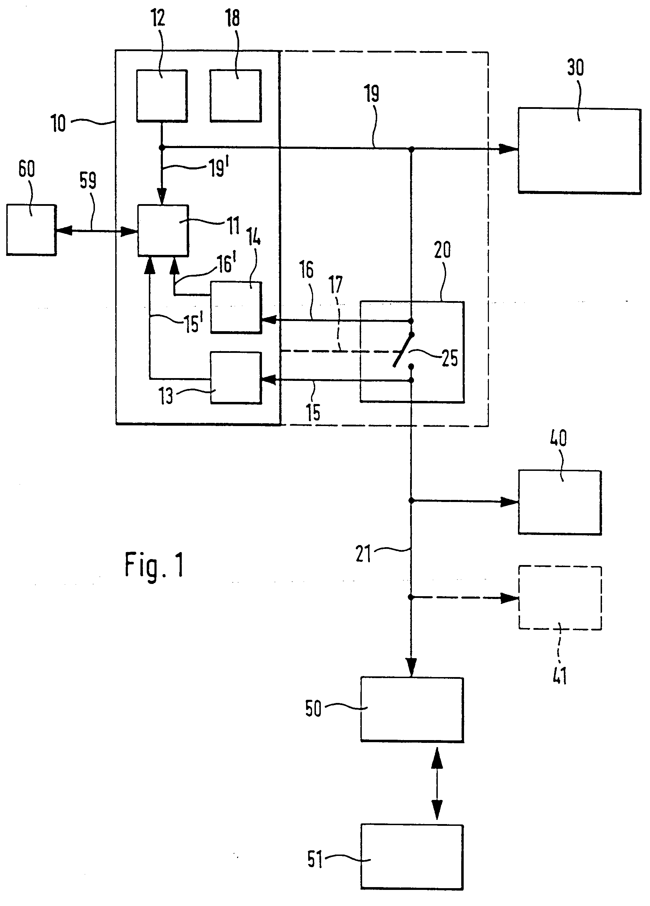

Figur 1 zeigt die wichtigsten Elemente einer Fahrzeugsicherungsanordnung als Blockschaltbild. Sie entspricht im wesentlichen bekannten Motordiagnosesystemen mit einer Diagnoseleitung zum Anschluß eines Steuergerätetesters. Zusätzlich weist sie noch eine Schaltvorrichtung 20 sowie ein Diebstahlschutzsteuergerät 10 auf.

Erstes Hauptelement der dargestellten Anordnung ist eine Diebstahlschutzsteuereinheit 10. Sie ist über einen ersten Leitungsteil 19, welcher Teil eines alle nachfolgend beschriebenen Elemente verbindenden Leitungssystems 19, 21 ist, mit einem Funktionssteuergerät 30 zur Steuerung einer Motor- oder einer anderen Fahrzeugfunktion, sowie mit einer Schaltvorrichtung 20 verbunden. In der Schaltvorrichtung 20 befindet sich ein Schalter 25, welcher den ersten Leitungsteil 19 in der Stellung GESCHLOSSEN mit einem zweiten Leitungsteil 21 verbindet, in der Stellung OFFEN von diesem trennt. Der zweite Leitungsteil 21 verbindet die Schaltvorrichtung 20 mit einer Schnittstelle 50, an welche ein externes Gerät 51 anschließbar ist. Daneben können an den zweiten Leitungsteil 21 noch weitere Funktionssteuergeräte 40, 41 zur Steuerung weiterer Motor- oder Fahrzeugfunktionen angeschlossen sein. Zur Anzeige der von der Diebstahlschutzsteuereinheit 10 abgegebenen Diagnosemeldungen kann, vorzugsweise im Fahrzeuginnenraum, eine Anzeigevorrichtung 60 vorgesehen sein. Sie ist über eine Leitungsverbindung 59 mit der Diebstahlschutzsteuereinheit 10 verbunden. Diebstahlschutzsteuereinheit 10 und Schaltvorrichtung 20 können zweckmäßig auch, wie durch die gestrichelte Linie angedeutet, als einheitliche Baugruppe ausgeführt sein.

In der Diebstahlschutzsteuereinheit 10 befindet sich eine Einrichtung 12 zum Erzeugen vorgegebener Signale auf dem ersten Leitungsteil 19. Bei den Signalen handelt es sich um binäre Signale in Form eines aus zwei Spannungspegeln aufgebauten Rechtecksignals. Die Spannungspegel entsprechen den logischen Pegeln LOW und HIGH. Über eine Leitungsverbindung 19' ist die Erzeugungseinrichtung 12 mit einer ebenfalls innerhalb der Diebstahlschutzsteuereinheit 10 realisierten Diagnoseeinheit 11 verbunden. Diese kommuniziert über eine Leitung 59 mit der Anzeigevorrichtung 60.

Weiterhin befinden sich in der Diebstahlschutzsteuereinheit 10 Mittel 13 zum Erfassen des auf dem zweiten Leitungsteil 21 anliegenden Signalpegels sowie Mittel 14 zum Erfassen des auf dem ersten Leitungsteil 19 anliegenden Signalpegels. Die Mittel 13 sind hierzu über eine Leitungsverbindung 15 mit dem zweiten Leitungsteil 21, die Erfassungsmittel 14 über eine Leitungsverbindung 16 mit dem ersten Leitungsteil 19 verbunden. Um andere Fehlerquellen möglichst auszuschließen, erfolgt die Verbindung der Leitungsverbindungen 15, 16 mit den Leitungsteilen 21, 19 zweckmäßig nahe am Schalter 25, wie in Figur 1 angedeutet. Die von den Erfassungsmitteln 13, 14 erfaßten Signale sind über Leitungsverbindungen 15', 16' der Diagnoseeinrichtung 11 zugeführt. Zur Koordination und Überwachung der in der Diebstahlschutzsteuereinheit 10 angeordneten Elemente 11, 12, 13, 14, 25 sowie zur Durchführung weiterer, hier nicht relevanter Funktionen, dient eine Steuereinheit 18. Sie ist - nicht dargestellt - mit allen Elementen der Diebstahlschutzsteuereinheit 10 verbunden. Zweckmäßig ist die Diebstahlschutzsteuereinheit als in einem Mikroprozessor realisiertes Softwareprogramm oder als ASIC realisiert.

Alle Steuergeräte 10, 30, 40, 41 verfügen jeweils über mindestens einen digitale Signale verarbeitenden integrierten Schaltkreis, zum Beispiel in Form einem Mikroprozessors oder eines anwenderspezifischen integrierten Schaltkreises (ASIC), welcher zum einen zur Durchführung der Kommunikation auf den Leitungsteilen 19, 21 dient. Zum anderen dient er zur Steuerung der jeweils gerätespezifischen Funktionen, wie etwa im Falle des Motorsteuerungsgeräts zur Bestimmung der Menge des einzuspritzenden Kraftstoffes, zur Steuerung der Zündung und dergleichen. Andere Steuerfunktionen dieser Art sind etwa die Getriebesteuerung 40 oder die Steuerung eines Antiblockier-/Antischlupfregelsystems 41. Sind, wie in Figur 1 angedeutet, mehrere Steuergeräte 30, 40, 41 vorhanden, kommuniziert das Diebstahlschutzsteuergerät 10 vorzugsweise mit dem Motorsteuerungsgerät 30.

Bei den an die Schnittstelle 50 anzuschließenden externen Geräten 51 handelt es sich insbesondere um Tester zur Diagnose der Steuergeräte 10, 30, 40, 41 oder Applikationsgeräte zur Datenerfassung aus den Steuergeräten 10, 30, 40, 41.

Als Leitungssystem 19, 21 dient bevorzugt die in zahlreichen Fahrzeugen ohnehin vorhandene Diagnoseleitung gemäß ISO-Norm 9141. Physikalisch besteht sie entweder aus einer einzigen Leitung, der sogenannten K-Leitung, oder einem Leitungspaar, dann als K-Leitung und L-Leitung bezeichnet.

Nachfolgend ist die Funktionsweise der in Figur 1 dargestellten Anordnung erläutert. Die Anordnung weist zwei Betriebszustände auf, welche durch die Stellung des Schalters 25, OFFEN beziehungsweise GESCHLOSSEN, bestimmt sind. Der erste Betriebszustand entspricht dem Fahrzeugstandardbetrieb. Er ist in Figur 1 dargestellt. Der Schalter 25 befindet sich in der Stellung OFFEN. Die Diebstahlschutzsteuereinheit 10 kommuniziert mit dem Funktionssteuergerät 30, vorzugsweise dem Motorsteuergerät. Sie gibt dessen Funktion frei, wenn sich der jeweilige Fahrzeugbenutzer beispielsweise durch Eingabe eines vorgegebenen Signalcodes legitimiert hat. Die Überprüfung des Codes erfolgt in der Diebstahlschutzsteuereinheit 10 in bekannter Weise. Sie ist aus Gründen der Übersichtlichkeit nicht dargestellt.

Der zweite Betriebszustand liegt vor, wenn sich der Schalter 25 in der Position GESCHLOSSEN befindet. Er ist vor allem für Wartungszwecke des Fahrzeugs vorgesehen, wenn, etwa bei einem Werkstattaufenthalt ein Motortester an die Schnittstelle 50 angeschlossen wird. Der Tester kommuniziert über das dann geschlossene Leitungssystem 19, 21 mit allen daran angeschlossenen Steuergeräten 10, 30, 40, 41, um beispielsweise in diesen angeordnete Datenspeicher auszulesen. Die Masterfunktion, das heißt die Kontrolle über die Kommunikation auf dem Leitungssystem 19, 21 geht in diesem Fall von der Diebstahlschutzsteuereinheit 10, oder gegebenenfalls vom Funktionssteuergerät 30 auf den Tester 51 über.

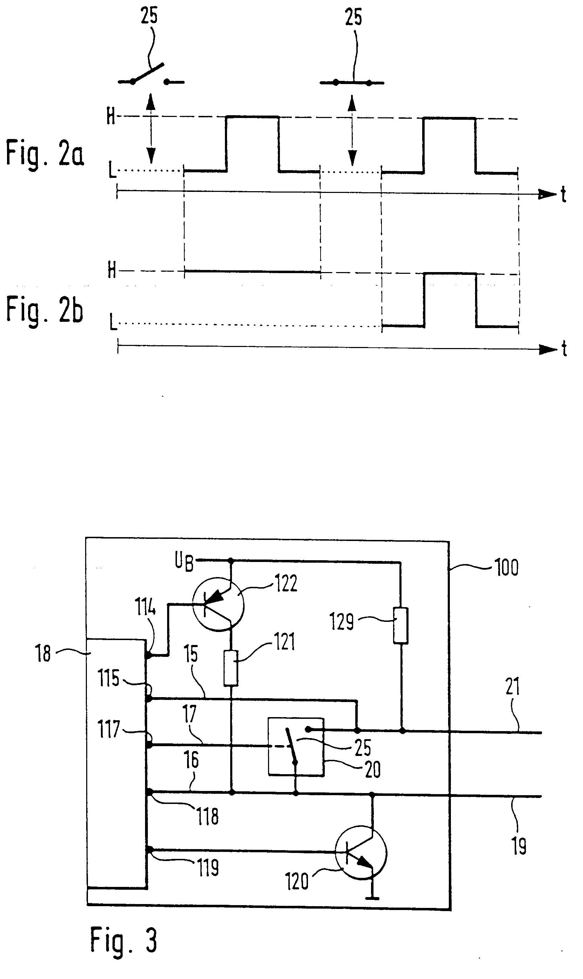

Um im Falle einer Fehlfunktion der vorbeschriebenen Anordnung die Zuordnung der Fehlerursache zu einem der beteiligten Elemente zu erleichtern, wird erfindungsgemäß die Funktion der Schaltvorrichtung 20 überwacht. Gemäß einer ersten, in Figur 2 veranschaulichten Ausführungsform geschieht dies mit Hilfe der Erfassungsmittel 13 und der Erzeugungseinrichtung 12 in folgender Weise: Die Diebstahlschutzsteuereinheit 10 steuert zunächst, wie in Figur 2a gezeigt, die Schaltvorrichtung 20 über die Datenleitung 17 an, um den Schalter 25 in die Soll-Stellung OFFEN zu bringen. Hieran anschließend erzeugt die Erzeugungseinrichtung 12 auf dem ersten Leitungsteil 19 ein vorgegebenes Signal, welches beispielsweise aus der Pegelfolge LOW-HIGH-LOW bestehen kann. Sodann steuert die Diebstahlschutzsteuereinheit 10 die Schaltvorrichtung 20 über die Datenleitung 17 an, um den Schalter 25 in die Soll-Stellung GESCHLOSSEN zu bringen. Die Erzeugungseinrichtung 12 erzeugt auf dem ersten Leitungsteil 19 daraufhin wieder ein vorgegebenes Signal, welches im einfachsten Fall dasselbe wie das zur Prüfung der offenen Schalterstellung benutzte ist. Während der gesamten Zeit erfassen die Erfassungsmittel 13 über die Leitungsverbindung 15 den auf dem zweiten Leitungsteil 21 anliegenden Signalpegel und übermitteln ihn der Diagnoseeinrichtung 11. Letzterer sind über die Leitung 19' zugleich die von der Erzeugungseinrichtung 12 abgegebenen Signale zugeführt. Die Diagnoseeinrichtung 11 prüft nun, ob die von den Erfassungsmitteln 13 übermittelten Signale in Abhängigkeit von den durch die Erzeugungseinrichtung 12 abgegebenen Signalen und der Stellung des Schalters 25 einen vorgegebenen Verlauf aufweisen. Dabei muß das in der Schalterposition OFFEN von den Erfassungsmitteln 13 erfaßte Signal auf dem zweiten Leitungsteil 21 einen konstanten Pegel, zum Beispiel, wie in Figur 2b gezeigt, den Pegel HIGH aufweisen. In der Schalterstellung GESCHLOSSEN muß die von den Erfassungsmitteln 13 erfaßte Pegelfolge mit derjenigen übereinstimmen, welche die Erzeugungseinrichtung 12 auf den ersten Leitungsteil 19 eingespeist hat. Stimmt eine von den Erfassungsmitteln 13 übermittelte Signalfolge nicht mit der erwarteten überein, gibt die Diagnoseeinrichtung 11 über die Leitungsverbindung 59 ein Fehlersignal an die Anzeigevorrichtung 60 ab, welche einem Benutzer das Vorliegen eines Fehlers der Schaltvorrichtung anzeigt.

Eine zweite Ausführung der Überwachungseinrichtung beruht auf der Verwendung zweier Erfassungsmittel 13, 14, wobei die Erfassungsmittel 14 zusätzlich den auf dem ersten Leitungsteil 19 anliegenden Signalpegel erfassen. Beide Erfassungsmittel 13, 14 führen die jeweils erfaßten Signalpegel der Diagnoseeinrichtung 11 zu. Diese prüft, ob die von den beiden Erfassungsmitteln 13, 14 übermittelten Signalpegel miteinander übereinstimmen. Ist die Soll-Stellung des Schalters 25 die Position OFFEN und stimmen die von den Erfassungsmitteln 13, 14 übermittelten Signale überein, sendet die Diagnoseeinrichtung 11 ein Fehlersignal an die Anzeigevorrichtung 60. Der Schalter ist in diesem Fall in fehlerhafter Weise dauerhaft geschlossen. Ist die Soll-Stellung des Schalters 25 dagegen die Stellung GESCHLOSSEN, und stimmen die von den Erfassungsmitteln 13, 14 übermittelten Signale dennoch nicht überein, sendet die Diagnoseeinrichtung 11 ebenfalls ein einen Fehler in der Schaltvorrichtung bezeichnendes Signal an die Anzeigevorrichtung 60. Der Schalter 25 ist in diesem Fall in fehlerhafter Weise dauerhaft offen. In dieser Ausführungsform ist es unerheblich, ob das Leitungssystem 19, 21 durch Signale von der Diebstahlschutzsteuereinheit 10 oder etwa durch Signale von einem externen Gerät 51, beaufschlagt wird. Die letztere Variante bietet sich deshalb besonders für Motortester an.

Figur 3 zeigt eine zweckmäßige Ausführung eines Diebstahlschutzsteuergeräts 100, in das sowohl eine Schaltvorrichtung 20 als auch eine erfindungsgemäße Überwachungsvorrichtung mit der Diebstahlschutzsteuereinheit integriert sind. Es umfaßt eine Steuereinrichtung 18, zum Beispiel in Form eines Mikroprozessors oder eines ASICS, einen ersten Leitungsteil 19, einen zweiten Leitungsteil 21 sowie eine Schaltvorrichtung 20 mit Schalter 25. In der Steuereinrichtung 18 ist, zweckmäßig als Programm, die Diagnoseeinrichtung 11 realisiert. Mit 15 ist eine Verzweigung des zweiten Leitungsteil 21 auf den Eingang 115 der Steuereinheit bezeichnet, welche zur Erfassung des auf dem zweiten Leitungsteil 21 anliegenden Spannungspegels dient. In analoger Weise dient die auf den Eingang 118 der Steuereinheit 18 geführte Datenleitung 16 zur Erfassung des Spannungspegels auf dem ersten Leitungsteil 19. Über den Ausgang 117 beziehungsweise die Datenleitung 17 erfolgt die Ansteuerung des Schalters 25 in der Schaltvorrichtung 20. Zur Definition des Spannungspegels HIGH dient eine über Schaltmittel 122 und Widerstand 121 auf den ersten Leitungsteil 19 sowie über den Widerstand 129 auf den zweiten Leitungsteil 21 geführte Spannung U_{B}. Die parallel liegenden Widerstände 129 und 121 sind zweckmäßig in einem Verhältnis von 100:1 bis 500:1, zum Beispiel 100 KΩ zu 500Ω dimensioniert. Mittels der Schaltmittel 122, welche beispielsweise, wie in Figur 3 angedeutet, als Transistor ausgeführt sein können, kann die Steuereinheit 18 über den Ausgang 114 den Zweig 122, 121 trennen. Dies ist vor allem erforderlich, um die Masterfunktion, das heißt die Kontrolle über die Kommunikation auf dem Datenleitungssystem 19, 21 an ein anderes Gerät, etwa einen Motortester abzugeben. Zur Erzeugung einer vorgegebenen Signalfolge auf dem ersten Leitungsteil 19 dienen die Schaltmittel 120, welche zweckmäßig, wie in Figur 3 angedeutet, ebenfalls in Form eines Transistors ausgeführt sein können. Sie werden über den Ausgang 119 durch die Steuereinheit 18 gesteuert. Je nach Stellung der Schaltmittel 120 liegt auf dem ersten Leitungsteil 19 der durch die Spannung U_{B} definierte Spannungspegel HIGH oder der durch den Bezugspunkt der Schaltmittel 120 definierte Schaltpegel LOW, in der Figur 3 : Masse, an.

Unter Beibehaltung des hier vorgestellten Grundgedankens der Überwachung der Schaltvorrichtung läßt sich eine Vielzahl von weiteren Ausgestaltungen einer Fahrzeugsicherungsanordnung ableiten. Beispielsweise kann statt der in Figur 3 angedeuteten Einbeziehung von Schaltvorrichtung 20 und Erfassungsmitteln 13, 14 in das Diebstahlschutzsteuergerät 100 auch eine zweiteilige Ausgestaltung vorgesehen sein, wobei die Erfassungsmittel 13, 14 in die Schaltvorrichtung 20 integriert sind. Auch können beispielsweise andere als die in Figur 2 dargestellten Prüfsignale verwendet werden.

## Patentansprüche

1. Fahrzeugsicherungsanordnung mit
einem Diebstahlschutzsteuergerät,
wenigstens einem Funktionssteuergerät,
einer Schnittstelle zum Anschluß eines externen Gerätes,
einem das Diebstahlschutzsteuergerät, das Funktionssteuergerät und die Schnittstelle verbindenden Leitungssystem, sowie einer Schaltvorrichtung mit den Schaltstellungen OFFEN und GESCHLOSSEN, die in der Stellung OFFEN das Leitungssystem in einen ersten, wenigstens das Diebstahlschutzsteuergerät und ein Funktionssteuergerät (30) verbindenden Leitungsteil (19) und einen zweiten, wenigstens die Schnittstelle (50) verbindenden Leitungsteil (21) trennt, wobei eine Einrichtung (13, 14, 15, 15', 16, 16', 11) zur Überwachung der Schaltvorrichtung (20) vorgesehen ist, welche ein Fehlersignal erzeugt, wenn die tatsächliche Position, OFFEN oder GESCHLOSSEN, der Schaltvorrichtung (20) nicht der als Sollstellung vorgegebenen Schaltstellung, OFFEN oder GESCHLOSSEN, entspricht.

2. Fahrzeugsicherungsanordnung nach Anspruch 1, dadurch gekennzeichnet, daß die Überwachungseinrichtung aufweist:
- eine Einrichtung (12) zum Erzeugen eines vorbestimmten, aus den logischen Pegeln LOW und HIGH aufgebauten binären Signals auf dem ersten Leitungsteil (19),
- Mitteln (13) zum Erfassen des auf dem zweiten Leitungsteil (21) anliegenden Signalpegels,
- sowie einer Diagnoseeinrichtung (11), die ein Fehlersignal abgibt, wenn die Erfassungsmittel (13) in der Soll-Schalterstellung OFFEN und bei Anliegen des vorbestimmten Signals auf dem ersten Leitungsteil (19) eine Änderung des Signalpegels auf dem zweiten Leitungsteil (21) feststellen, und/oder wenn der durch die Erfassungsmittel (13) festgestellte Signalpegelverlauf auf dem zweiten Leitungsteil (21) in der Soll-Schalterstellung GESCHLOSSEN nicht dem vorbestimmten Signal entspricht.

3. Fahrzeugsicherungsanordnung nach Anspruch 1, dadurch gekennzeichnet, daß die Überwachungseinrichtung aufweist:
- Mittel (14, 16) zum Erfassen des auf dem ersten Leitungsteil (19) anliegenden Signalpegels,
- Mittel (13, 15), zum Erfassen des auf dem zweiten Leitungsteil (21) anliegenden Signalpegels,
- sowie eine Diagnosevorrichtung (11), die ein Fehlersignal abgibt, wenn die von den Erfassungsmitteln (13, 14, 15, 16) erfaßten Signale in der Soll-Schalterstellung OFFEN übereinstimmen und/oder wenn die von den Erfassungsmitteln (13, 14, 15, 16) erfaßten Signale in der Soll-Schalterstellung GESCHLOSSEN nicht übereinstimmen.

4. Fahrzeugsicherungsanordnung nach Anspruch 3, dadurch gekennzeichnet, daß ein Signal zur Prüfung der Schaltvorrichtung (20, 25) von einem an die Schnittstelle (50) angeschlossenen externen Gerät erzeugt wird.

5. Fahrzeugsicherungsanordnung nach einem der vorhergehenden Ansprüche, dadurch gekennzeichnet, daß das Leitungssystem (19, 21) aus einer Diagnoseleitung nach der ISO-Norm 9141 hervorgeht, in welche eine Schaltvorrichtung (20) plaziert wurde.

## Claims

1. Vehicle security device having an anti-theft control unit, at least one function control unit, an interface for connecting an external unit, a line system connecting the anti-theft control unit, the function control unit and the interface, and a switching device with the switched positions OPEN and CLOSED which, in the OPEN position separates the line system into a first line component (19) connecting at least the anti-theft control unit and a function control unit (30), and a second line component (21) connecting at least the interface (50), an apparatus (13, 14, 15, 15', 16, 16', 11) for monitoring the switching device (20) being provided, which apparatus generates an error signal if the actual OPEN or CLOSED position of the switching device (20) does not correspond to the OPEN or CLOSED switched position prescribed as desired position.

2. Vehicle security device according to Claim 1, characterized in that the monitoring apparatus has:
- a device (12) for generating a predetermined binary signal, made up of the logic levels LOW and HIGH, on the first line component (19),
- means (13) for detecting the signal level present on the second line component (21),
- and a diagnostic apparatus (11) which emits an error signal if the detection means (13) detect a change in the signal level on the second line component (21) in the OPEN desired switched position and when a predetermined signal is present on the first line component (19), and/or if the signal level variation, detected by the detection means (13), on the second line component (21) in the CLOSED desired switched position does not to correspond to the predetermined signal.

3. Vehicle security device according to Claim 1, characterized in that the monitoring apparatus has:
- means (14, 16) for detecting the signal level present on the first line component (19),
- means (13, 15) for detecting the signal level present on the second line component (21),
- and a diagnostic apparatus (11) which emits an error signal if the signals detected by the detection means (13, 14, 15, 16) in the OPEN desired switched position correspond and/or if the signals detected by the detection means (13, 14, 15, 16) in the CLOSED desired switched position do not correspond.

4. Vehicle security device according to Claim 3, characterized in that a signal for testing the switching device (20, 25) is generated by an external unit which is connected to the interface (50).

5. Vehicle security device according to one of the preceding claims, characterized in that the line system (19, 21) is based on a diagnostic line according to the ISO Standard 9141 in which a switching device (20) has been placed.

## Revendications

1. Dispositif de sécurité pour véhicule comprenant :
- un appareil de commande de la protection contre le vol,
- au moins un appareil de commande d'une fonction,
- une interface permettant de raccorder un appareil externe,
- un système conducteur reliant les deux premiers appareils et l'interface,
- un dispositif de commutation ayant des positions OUVERT et FERMÉ telles que, en position OUVERT, le système conducteur se trouve divisé en une première partie conductrice (19) reliant au moins l'appareil de commande de la protection contre le vol et un appareil de commande d'une fonction (30) et en une seconde partie conductrice (21) reliant au moins l'interface (50),
caractérisé en ce qu'
il est prévu un dispositif (13, 15, 15', 16, 16', 11) de surveillance du dispositif de commutation (20) qui émet un signal de défaut si la position réelle, OUVERT ou FERMÉ, du dispositif de commutation (20) ne correspond pas à la position OUVERT ou FERMÉ pré-imposée.

2. Dispositif selon la revendication 1,
caractérisé en ce que
le dispositif de surveillance comprend :
- un dispositif (12) servant à générer dans la première partie conductrice (19) un signal binaire bâti sur les niveaux logiques HAUT et BAS,
- des moyens (13) de perception du niveau du signal existant dans la seconde partie conductrice (21),
- un dispositif de diagnostic (11) délivrant un signal de défaut si les moyens de perception (13) se trouvent dans la position pré-imposée OUVERT du commutateur, constatent que le niveau du signal dans la seconde partie conductrice (21) varie lorsque le signal pré-imposé occupe la première partie conductrice (19) et/ou si le niveau du signal dans la seconde partie conductrice (21) que constatent les moyens de perception (13), dans la position pré-imposée FERMÉ de commutation, ne correspond pas au signal prédéfini.

3. Dispositif selon la revendication 1,
caractérisé en ce que
le dispositif de surveillance comprend,
- des moyens (14, 16) de perception du niveau du signal existant dans la première partie conductrice (19),
- des moyens (13, 15) de perception de niveau du signal existant dans la seconde partie conductrice (21),
- un dispositif de diagnostic (11) délivrant un signal de défaut si les signaux constatés par les moyens de perception (13, 14, 15, 16) lorsque le commutateur est en position imposée OUVERT sont en concordance et/ou si les signaux constatés par les moyens de perception (13, 14, 15, 16) lorsque le commutateur est en position imposée FERMÉ ne sont pas en concordance.

4. Dispositif selon la revendication 3,
caractérisé en ce qu'
un signal de contrôle du dispositif de commutation (20, 25) est émis par un appareil externe raccordé à l'interface (50).

5. Dispositif selon une des revendications précédentes,
caractérisé en ce que
le système conducteur (19, 21) dérive d'un conducteur de diagnostic selon la norme ISO 9141, par montage sur ce conducteur d'un dispositif de commutation (20).
